# EUROPEAN PATENT SPECIFICATION

(11) **EP 3 887 672 B1**
(45) Date of publication and mention of the grant of the patent: **04.01.2023**
(21) Application number: 19808970.8
(22) Date of filing: 20.11.2019
(51) Int. Cl.: F03D 7/02

(54) **A WIND TURBINE BLADE PITCH SYSTEM**
WINDTURBINE MIT EINEM BLATTANSTELLSYSTEM
SYSTÈME DE PAS DE PALE D'ÉOLIENNE

(30) Priority: 27.11.2018 DK PA201870779
(43) Date of publication of application: 06.10.2021
(73) Proprietor: VESTAS WIND SYSTEMS A/S, 8200 Aarhus N (DK)
(72) Inventor: NIELSEN, Jens Bredal, 7600 Struer (DK); LORENTE VELAZQUEZ, Daniel, 28100 Alcobendas (ES); CARRION ABENGOZAR, Pedro, 28224 Pozuelo de Alarcón (ES)
(74) Representative: Vestas Patents Department
(86) International application number: PCT/DK2019/050357
(87) International publication number: WO 2020/108714

(56) References cited:
- EP-A1- 2 343 455
- CN-Y- 201 334 986
- US-B2- 9 410 531

## Description

### FIELD OF THE INVENTION

This invention relates to a blade pitch system for a wind turbine. In particular, aspects of the invention relate to the blade pitch system and a wind turbine comprising the blade pitch system.

### BACKGROUND

Wind turbines comprise a blade pitch system for controlling the pitch of their rotor blades according to ambient wind conditions, and rotational speed and power generation requirements. The repeated use of the blade pitch system over time can lead to fatigue in some of its mechanical elements, which, in some cases, can lead to a potentially catastrophic failure in the system. Some relevant background art pitch systems are disclosed in EP 2 343 455 A1, US 9 410 531 B2 and CN 201 334 986 Y.

It is against this background that the invention has been devised.

### STATEMENTS OF INVENTION

According to a first aspect of the invention, there is provided a wind turbine blade pitch system for rotating rotor blades of a wind turbine relative to a hub, the wind turbine pitch system comprising: an actuating stem moveable in an axial direction; a traverse holder; a traverse rotatably mounted on the actuating stem, wherein the traverse comprises a traverse arm radially extending from the traverse holder; a connection plate rotationally coupling the traverse and the traverse holder; and, a crank arm connected at one end to the traverse arm and at another end to a rotatable pitch bearing coupled to the rotor blade, the crank arm being configured to convert the axial movement of the actuating stem into a rotational movement of the rotor blade, wherein the connection plate comprises: an inner annular flange region secured to the traverse holder; an outer annular flange region secured to the traverse; and, a central annular region radially positioned between and connecting the inner and outer annular flange regions, wherein the central annular region is configured to flex relative to the inner and outer annular flange portions to reduce the stiffness of the connection plate between inner and outer annular flange portions.

Preferably, the central annular region comprises a first set of radial arms connecting the central annular region and the outer annular flange region and a second set of radial arms connecting the central annular region and the inner annular flange region.

Preferably, the first set of radial arms and/ or the second set of radial arms are diametrically opposed.

Preferably, the first set of radial arms is offset from the second set of radial arms by 90 degrees.

Preferably, the wind turbine blade pitch system further comprises a first set of semi-circular slots radially located between the central annular region and the outer annular flange region and a second set of semi-circular slots radially located between the central annular region and the inner annular flange region.

Alternatively, the wind turbine blade pitch system further comprises a first set of semi-circular grooves connecting the central annular region and the outer annular flange region and a second set of semi-circular grooves connecting the central annular region and the inner annular flange region.

Preferably, the central annular region comprises a first concentric groove connecting the central annular region and the inner annular flange region and a second concentric groove connecting the central annular region and the outer annular flange region.

Preferably, the thickness of the central annular region is less than the thickness of the outer and inner annular flange regions.

Preferably, the connection plate is secured to the traverse using a plurality of bolts, wherein each bolt of the plurality of bolts comprises a body diameter of 12mm and a body length of 80mm.

Preferably, the connection plate is secured to the traverse using a plurality of bolts, wherein each bolt of the plurality of bolts comprises a central section having a diameter less than the body diameter of the bolt.

Preferably, the wind turbine blade pitch system further comprises a flexible spacer provided between the connection plate and the traverse and/ or the traverse holder.

According to a second aspect of the invention, there is provided a wind turbine comprising a wind turbine blade pitch system according to the first aspect.

### BRIEF DESCRIPTION OF THE DRAWINGS

The above and other aspects of the invention will now be described, by way of example only, with reference to the accompanying drawings, in which:
Figure 1 is a schematic view of a wind turbine for use with the invention;
Figure 2 is a schematic view of the wind turbine of Figure 1 at a systems level;
Figure 3 is a perspective view of a traverse assembly of a blade pitch system housed within the hub of the wind turbine of Figure 1;
Figure 4 is a side view of the traverse assembly of Figure 3 showing a rotor blade in a zero angle pitch position;
Figure 5 is a side view of the traverse assembly of Figure 3 showing a rotor blade in a feathered pitch position;
Figure 6 is a cross-sectional view of the traverse assembly of Figure 3;
Figure 7 is an end view of a connection plate of the traverse assembly of Figure 3;
Figure 8 is an end view of a connection plate in accordance with a first embodiment of the invention;
Figure 9 shows side views of the connection plate of Figure 8; and,
Figure 10 is an end view of a connection plate in accordance with a third embodiment of the invention.

In the drawings, like features are denoted by like reference signs.

### SPECIFIC DESCRIPTION

The following detailed description refers to the accompanying drawings that show, by way of illustration, specific details and embodiments in which the invention may be practiced. These embodiments are described in sufficient detail to enable those skilled in the art to practice the invention. Other embodiments may be utilised, and structural and logical changes may be made without departing from the scope of the invention as defined in the appended claims. Moreover, references in the following description to "outer", "inner" and any other terms having an implied orientation are not intended to be limiting, and refer only to the orientation of the features as shown in the accompanying drawings.

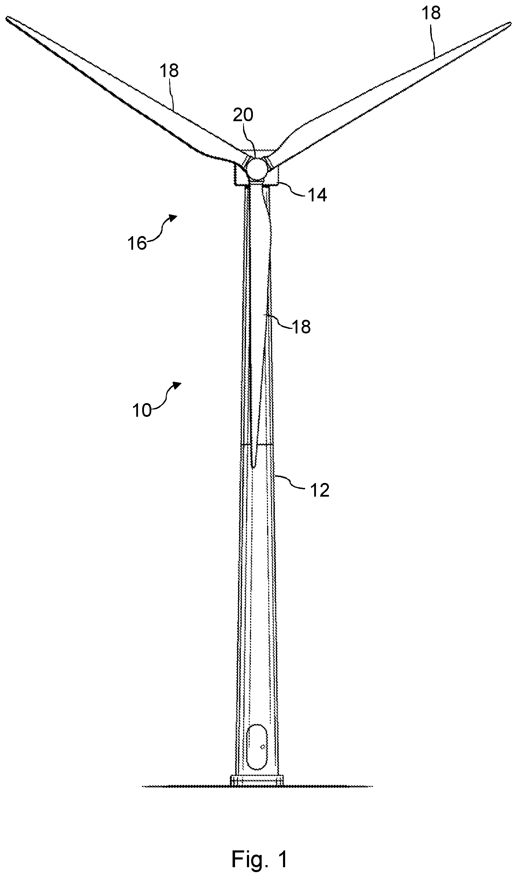

Figure 1 shows a wind turbine, generally designated as 10, comprising a tower 12. The tower 12 supports a nacelle 14 to which a rotor 16 is mounted. The rotor 16 is operatively coupled to a generator housed inside the nacelle 14. In addition to the generator, the nacelle 14 houses miscellaneous components required for converting wind energy into electrical energy, along with various other components needed to operate, control, and optimise the performance of the wind turbine 10. The rotor 16 comprises a plurality of rotor blades 18 extending radially from a central hub 20. In this example, the rotor 16 comprises three rotor blades 18, although it will be apparent to the skilled reader that other configurations are possible. The rotor blades 18 are pitch-adjustable. That is, the pitch of the rotor blades 18 can be adjusted in accordance with a collective pitch setting, where each rotor blade 18 is set to the same pitch value relating to the collective pitch setting.

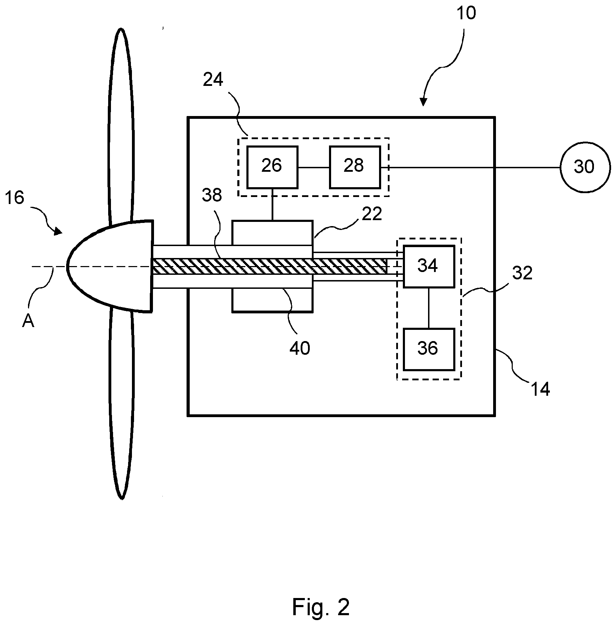

With reference to Figure 2, which is a schematic illustration of the wind turbine 10 at a systems level, the wind turbine 10 further comprises a gearbox 22 and a power generation system 24 including a generator 26 and a power converter system 28. The gearbox 22 gears up the rotational speed of the rotor 16 and drives the generator 26, which in turn feeds generated power to the power converter system 28. The power output of the power converter system 28 is transmitted to a load 30, which may be an electrical grid. The wind turbine 10 further comprises a hydraulic actuating system 32, which forms part of a blade pitch system for rotating the rotor blades 18, about their respective longitudinal axis, relative to the hub 20. The hydraulic actuating system 32 comprises a hydraulic generator 34 and a controller 36 for controlling the hydraulic generator 34 to effect axial movement of an actuating stem 38, which defines a rotational axis A of the rotor 16. The actuating stem 38 is arranged to move axially outwards from the nacelle 14, as permitted by the hydraulic actuating system 32, against a biasing means (not shown), which functions to urge the actuating stem 38 back into the nacelle 14. The blade pitch system further comprises a traverse holder 40, rotatably mounted on the actuating stem 38 to rotate about the rotational axis A. The traverse holder 40 is coupled to the actuating stem 38 such that it too moves axially relative to the nacelle 14 in a reciprocating motion as permitted by the hydraulic actuating system 32 and the biasing means.

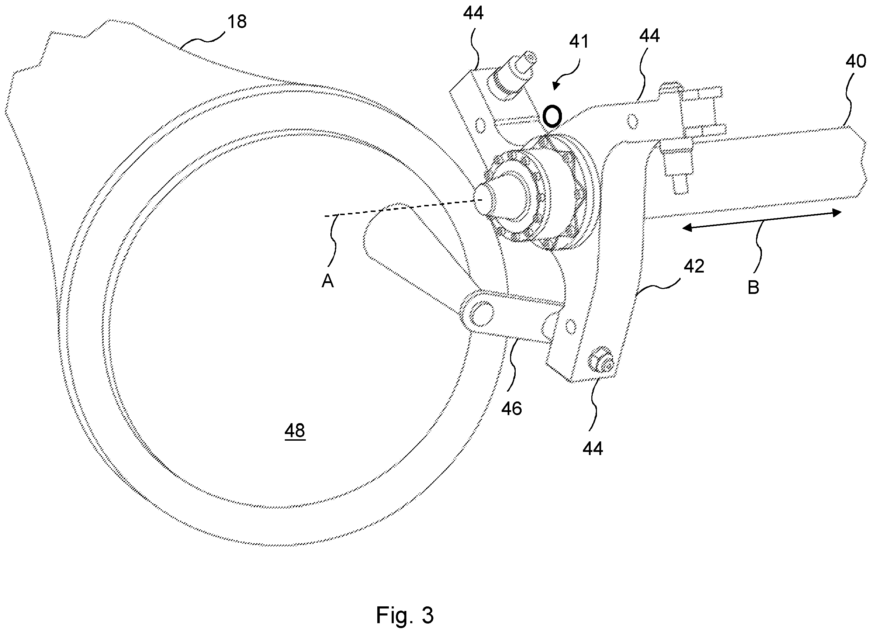

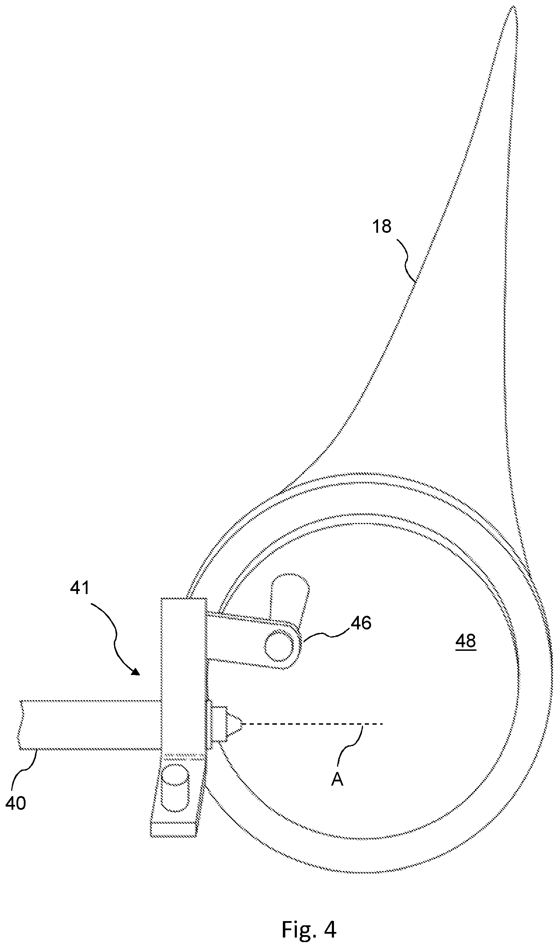

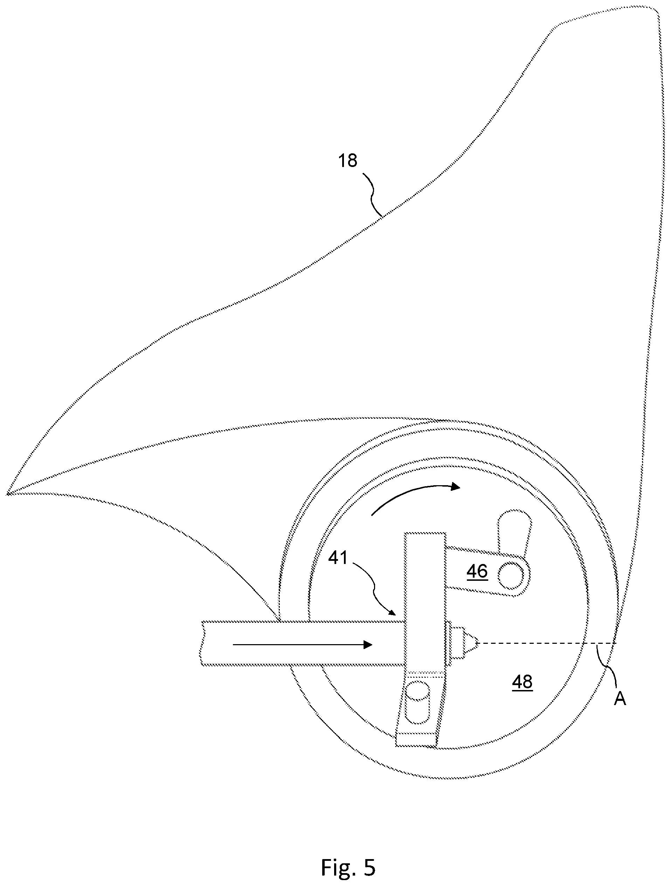

With reference to Figure 3, which shows the parts of the blade pitch system housed within the hub 20, the blade pitch system further comprises a traverse assembly, generally designated by 41, secured to the traverse holder 40. The traverse assembly 41 comprises a traverse 42 comprising three traverse arms 44 radially extending from the traverse holder 40 in a plane perpendicular to the rotational axis A. Each traverse arm 44 is arranged to carry a respective crank arm 46, although only one crank arm 46 is shown in Figure 3. The crank arms 46 are moveably connected at one end to the traverse arms 44 and at the other end to a rotatable pitch bearing 48 operatively coupled to the root of a respective rotor blade 18. The crank arms 46 function to rotationally connect the traverse assembly 41 and the rotor 16, and to impart the reciprocating motion of the actuating stem 38, as indicated by arrow B, to the rotatable pitch bearing 48, causing the rotor blades 18 to pitch between a pitch angle of zero, as shown in Figure 4, and a feathered pitch position, as shown in Figure 5.

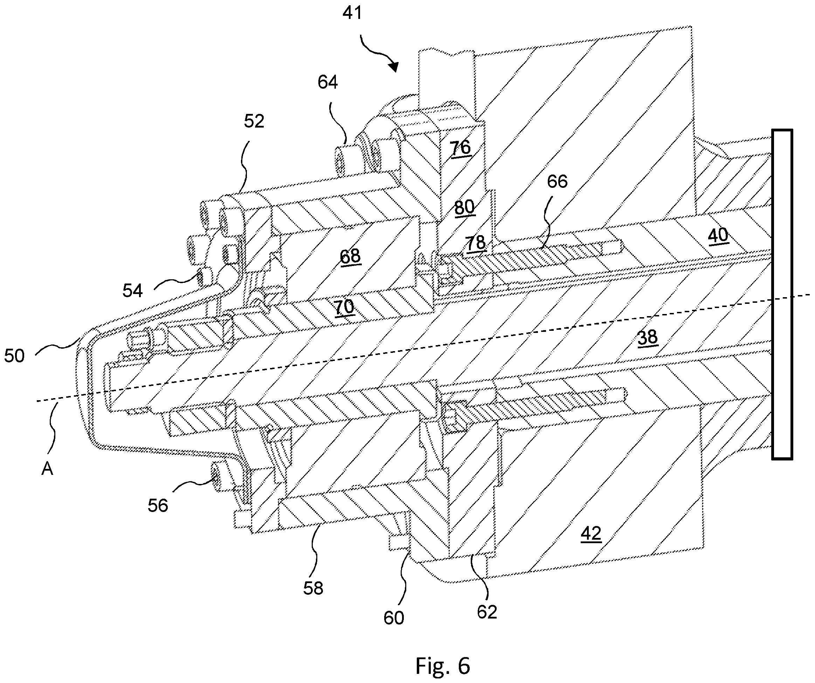

With reference to Figure 6, the traverse assembly 41 further comprises a cap 50 secured to a first flange 52 through a first plurality of concentrically arranged bolts 54. In turn, the first flange 52 is secured, by a second plurality of concentrically arranged bolts 56, to a cylindrical shell 58. At the end remote from the first flange 52, the cylindrical shell 58 comprises a second flange 60, which abuts an outer annular flange region 76 of a connection plate 62. The connection plate 62 functions to rotationally couple the traverse assembly 41 and the traverse holder 40. To this end, a third and fourth plurality of concentrically arranged bolts 64, 66 are provided (hereinafter, "the third and fourth plurality of bolts 64, 66). The third plurality of bolts 64 extend from the second flange 60, through the outer annular flange region 76 of the connection plate 62, into the traverse 42, securing the second flange 60, the connection plate 62 and the traverse 42. Whereas, the fourth plurality of bolts 66 extend through an inner annular flange region 78 of the connection plate 62, which is aligned with the end of the traverse holder 40, into the traverse holder 40, joining the connection plate 62 and the traverse holder 40. A first bearing 68 is provided between a concentric support body 70 and the cylindrical shell 58 to rotatably support the traverse assembly 41 and the traverse holder 40 relative to the actuating stem 38 about the rotational axis A. A second bearing (not shown), in the form of a slide bearing, is provided between the actuating stem 38 and the traverse holder 40 to give additional rotational support to the traverse holder 40 relative to the actuating stem 38. One end of the support body 70 abuts a shoulder element in the actuating stem 38 and the other end is provided with a bolt to secure the support body 70 to the actuating stem 38.

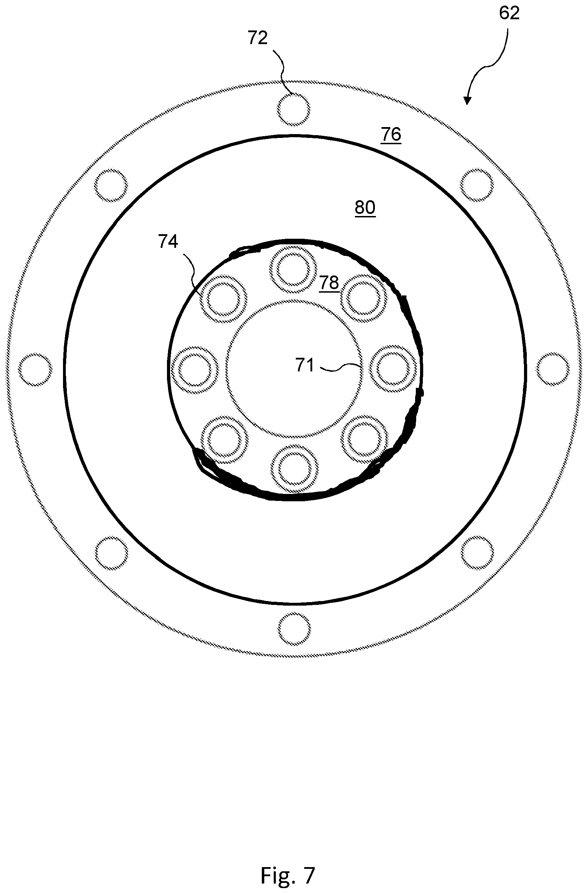

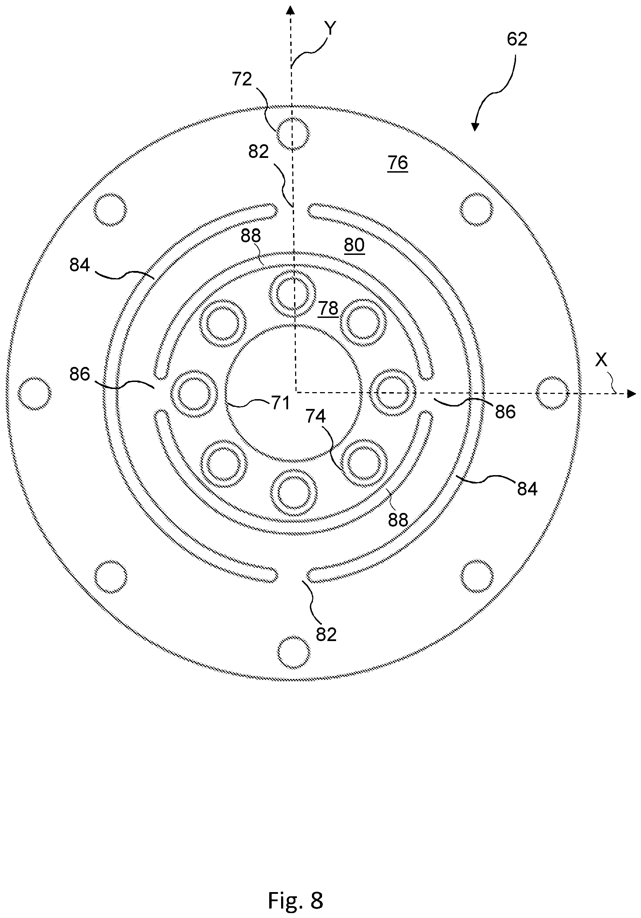

It should be noted that nothing in figures 1-5 reveals whether a prior art connection plate or a connection plate according to embodiments of the present invention is used. In figure 6, a prior art connection plate is used, but even though this view is important to understand the context of the invention, it would not make sense to show a further figure with the same view including an inventive connection plate, as the difference is minor in such view. Hence, figures 1-6 are shown to bring the context of the present invention, whereas the difference between the present invention such as shown in figures 8-10 and prior art in figure 7 will be clear from the following.

Figure 7 is an end view of the prior art connection plate 62 comprising the outer and inner annular flange regions 76, 78, together with a central aperture 71 for receiving the actuating stem 38. A first and second plurality of apertures 72, 74 are provided, circumferentially arranged in the outer and inner annular flange regions 76, 78, for receiving the third and fourth plurality of bolts 64, 66 respectively. The connection plate 62 further comprises a central annular region 80 radially positioned between and connecting the outer and inner annular flange regions 76, 78. As can be seen in the cross-sectional view of Figure 6, the central annular region 80 has a uniform thickness equal to that of the inner annular flange region 78, providing a stiff connection between the outer and inner annular flange regions 76, 78.

Inaccuracies in the blade pitch system, sometimes arising over time due to fatigue in the components forming the blade pitch system, and/ or inconsistencies between the individual rotor blades 18 can establish an uneven load distribution across the rotor 16 during the operation of the wind turbine 10. Such an uneven load distribution can cause the rotor blades 18 to exert different forces on their respective traverse arms 44, via the crank arms 46, that act to push or pull the traverse arms 44, urging them to move from the plane perpendicular to the rotational axis A and, in some instances, also urging the traverse 42 to move from its axial position. Due to the stiffness of the connection plate 62, these forces establish a load path extending across the joint between the connection plate 62 and the traverse holder 40, and can generate excessive compression and tension forces that are transmitted through the fourth plurality of bolts 66 along their longitudinal axes.

Moreover, during the reciprocating motion of the actuating stem 38, the reactive forces generated by the rotation of the rotatable pitch bearings 48 are transferred back through the crank arms 46 to exert a bending moment of force on the traverse arms 44, urging the traverse 42 to rotate independently of the traverse holder 40. This can generate excessive bending forces acting on the fourth plurality of bolts 66, perpendicularly to their longitudinal axes, when the pitch of the rotor blades 18 is altered. Overtime these excessive axial and bending forces can cause the fourth plurality of bolts 66 to fracture, removing the ability to collectively pitch the rotor blades 18, which can result in damage to the wind turbine 10.

With the present invention improvements to the above-mentioned problems are believed to have been provided. In order to reduce the fatigue in the fourth plurality of bolts 66 resulting from these forces, the connection plate 62 of the invention is arranged such that its stiffness is reduced so as to provide a damping effect on the forces.

Figure 8 shows the connection plate 62 according to a first embodiment of the invention. Similar to the connection plate 62 of Figure 6, this connection plate 62 also comprises a central aperture 71 for the actuating stem 38, together with a first and second plurality of apertures 72, 74 circumferentially arranged in an outer and inner annular flange regions 76, 78 respectively. Each aperture of the first and second plurality of apertures 72, 74 is configured to receive a bolt of the third and fourth plurality of bolts 64, 66 respectively to establish a connection between the traverse assembly 41 and the traverse holder 40. In the embodiment shown, the connection plate 62 comprises eight apertures 72, 74 in each of the outer and inner annular flange regions 76, 78, although it will be apparent to the skilled reader that fewer or more apertures 72, 74 could be used. The connection plate 62 further comprises a central annular region 80 located radially between the inner and outer flange regions 76, 78. The central annular region 80 comprises a first and second set of diametrically opposed radial arms 82, 86. The first set of radial arms 82 connect the central annular region 80 and the outer annular flange region 76, defining a first set of semi-circular gaps 84 therebetween extending either side of the radial arms 82. Similarly, a second set of radial arms 86 connect the central annular region 80 and the inner annular flange region 78, and define a second set of semi-circular gaps 88 therebetween. In this embodiment, the first and second set of radial arms 82, 86 extend along the Y-axis and the X-axis of the connection plate 62 respectively, and so are offset from each other by 90 degrees. The provision of the first and second sets of radial arms 82, 86 allows the central annular region 80 to flex relative to the outer and inner annular flange regions 76, 78, damping the effect of any excessive forces acting on the fourth plurality of bolts 66.

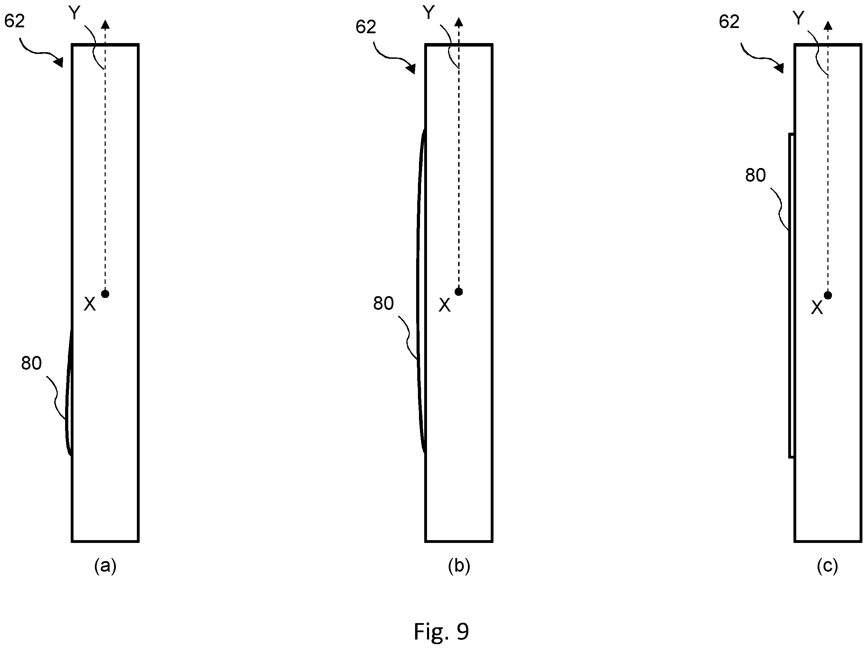

Figure 9 shows side views of the first embodiment of the connection plate 62 illustrating three modes by which the central annular region 80 can flex relative to the outer and inner annular flange regions 76, 78. It should be understood that these illustrations serve to demonstrate only the modes by which the central annular region 80 can flex and do not indicate the extent by which it can flex. With reference to view (a), in the event of an uneven load distribution on the traverse assembly 41, resulting from axial forces acting to push or pull the traverse arms 44, the central annular region 80 is configured to flex or rotate about the X-axis of the connection plate 62, as provided by the second set of radial arms 86, in order to reduce the compression and tension forces acting on the fourth plurality of bolts 66 as a result of the uneven load distribution. Similarly, the first set of radial arms 82 enables the central annular region 80 to flex or rotate about the Y-axis of connection plate 62, damping the uneven load distribution and preventing excessive compression and tension forces from acting on the fourth plurality of bolts 66 as shown in view (b). View (c) shows a mode by which the central annular region 80 can flex in the event that the traverse assembly 41 is subjected to an even load distribution. In this situation, the central annular region 80 may flex axially in order to dampen any excessive compression or tension forces that would otherwise act on the fourth plurality of bolts 66. Moreover, the addition of flexibility to the connection plate 62 also enables the central annular region 80, to a lesser extent, to rotatably flex to dampen any excessive bending forces that would otherwise act on the fourth plurality of bolts 66. That is, reducing the axial and torsional stiffness of the connection plate 62 between the outer and inner annular flange regions 76, 78, reduces the forces exerted on the fourth plurality of bolts 66.

In a second embodiment of the invention, the connection plate 62 is substantially the same as the first embodiment except the sets of semi-circular gaps 84, 88 are replaced by a first and second set of semi-circular grooves in at least one of the front or rear faces of the connection plate 62. The semi-circular grooves form part of the central annular region 80 and define an area of the connection plate 62 with a reduced thickness, when compared to the rest of the connection plate 62, to reduce the axial and torsional stiffness of the connection plate 62 in the region between the outer and inner annular flange regions 76, 78.

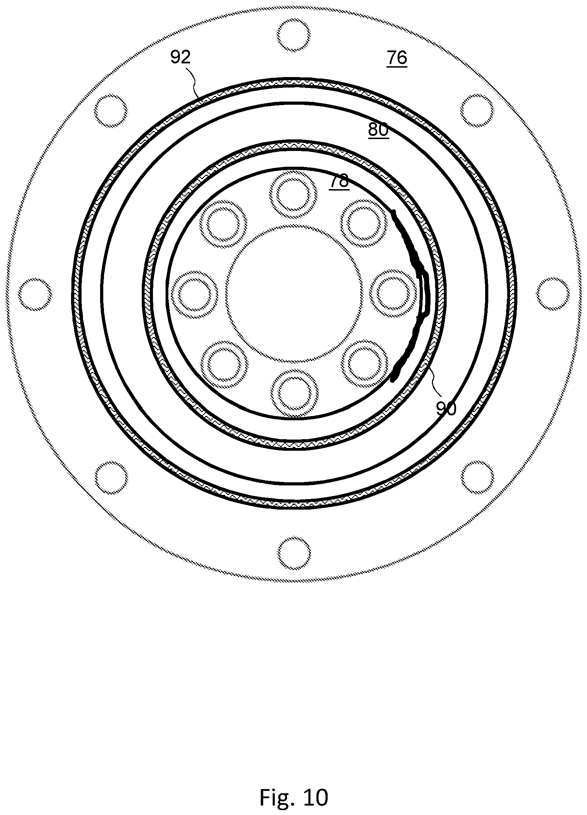

Figure 10 shows the connection plate 62 according to a third embodiment of the invention. In this embodiment, the central annular region 80 is connected to the inner and outer annular flange regions 78, 76 by first and second concentric grooves 90, 92 respectively in one of the front or rear faces of the connection plate 62. The other of the front or rear faces of the connection plate 62 may also comprise corresponding concentric grooves. As in the second embodiment, the concentric grooves 90, 92 define an area of the connection plate 62 with a reduced thickness, thereby enabling the central annular region 80 to flex relative to the outer and inner annular flange regions 76, 78.

In a fourth embodiment of the invention, the central annular region 80 itself is a concentric groove in one of the front or rear faces of the connection plate 62, providing a connection between the outer and inner annular flange regions 76, 78. The connection plate 62 may also comprise a corresponding concentric groove in the other of the front or rear faces. In this embodiment, the central annular region 80 defines an area of the connection plate 62 with a reduced thickness, when compared to the thicknesses of the outer and inner annular flange regions 76, 78, thereby enabling the central annular region 80 to flex relative to the outer and inner annular flange regions 76, 78.

In addition to reducing the stiffness of the connection plate 62, the compression and tension forces that are transmitted through the fourth plurality of bolts 66 can also be reduced by including flexible spacers in the joint between the connection plate 62 and the traverse 42 and/ or the joint between the connection plate 62 and the traverse holder 40. The flexible spacer may be in the form of a rubber ring, similar to a gasket, and function to absorb some of the excessive compression and tension forces that would otherwise be transmitted through the fourth plurality of bolts 66.

Also, in order to reduce fatigue, the fourth plurality of bolts 66 could be made stronger by being replaced with longer bolts, and the traverse holder 40 could be configured to receive the longer bolts. For example, the longer bolts may comprise M 12x80 bolts. That is, bolts having a body diameter and length of 12mm and 80mm respectively.

Moreover, in order to reduce fatigue in the fourth plurality of bolts 66 by increasing their flexibility, each bolt of the fourth plurality of bolts 66 may comprise a central section having a diameter less than the body diameter. Using the example of an M12x80 bolt given above, in that case the central section would have a diameter less than 12mm.

It will be appreciated by those skilled in the art that the invention has been described by way of example only, and that a variety of alternative approaches may be adopted without departing from the scope of the invention as defined in the appended claims. For example, as noted above, in the first and second embodiments of the connection plate 62, the first and second set of diametrically opposed radial arms 82, 86 are offset from each other by 90 degrees. However, the skilled reader will appreciate that such an arrangement is not intending to be limiting and that other offset values could be used, and that the radial arms 82, 86 do not necessarily need to be diametrically opposed provided that the relative flexibility of the central annular region 80 of the connection plate 62, when compared to the outer and inner annular flange regions 76, 78, is retained..

## Claims

1. A wind turbine blade pitch system for rotating rotor blades (18) of a wind turbine (10) relative to a hub (20), the wind turbine pitch system comprising:
an actuating stem (38) moveable in an axial direction;
a traverse holder (40);
a traverse (42) rotatably mounted on the actuating stem (38), wherein the traverse (42) comprises a traverse arm (44) radially extending from the traverse holder (40);
a connection plate (62) rotationally coupling the traverse (42) and the traverse holder (40); and,
a crank arm (46) connected at one end to the traverse arm (44) and at another end to a rotatable pitch bearing (48) coupled to the rotor blade (18), the crank arm (46) being configured to convert the axial movement of the actuating stem (38) into a rotational movement of the rotor blade (18),
**characterized in that** the connection plate (62) comprises:
an inner annular flange region (78) secured to the traverse holder (40);
an outer annular flange region (76) secured to the traverse (42); and,
a central annular region (80) radially positioned between and connecting the inner and outer annular flange regions (78, 76), wherein the central annular region (80) is configured to flex relative to the inner and outer annular flange portions (78, 76) to reduce the stiffness of the connection plate (62) between inner and outer annular flange portions (78, 76).

2. A wind turbine blade pitch system according to claim 1, wherein the central annular region (80) comprises a first set of radial arms (82) connecting the central annular region (80) and the outer annular flange region (76) and a second set of radial arms (86) connecting the central annular region (80) and the inner annular flange region (78).

3. A wind turbine blade pitch system according to claim 2, wherein the first set of radial arms (82) are diametrically opposed.

4. A wind turbine blade pitch system according to claim 2 or 3, wherein the second set of radial arms (86) are diametrically opposed.

5. A wind turbine blade pitch system according to claim 4 when dependent on claim 3, wherein the first set of radial arms (82) is offset from the second set of radial arms (86) by 90 degrees.

6. A wind turbine blade pitch system according to any preceding claim, further comprising a first set of semi-circular slots (84) radially located between the central annular region (80) and the outer annular flange region (76) and a second set of semi-circular slots (88) radially located between the central annular region (80) and the inner annular flange region (78).

7. A wind turbine blade pitch system according to any one of claims 1 to 5, further comprising a first set of semi-circular grooves connecting the central annular region (80) and the outer annular flange region (76) and a second set of semi-circular grooves connecting the central annular region (80) and the inner annular flange region (78).

8. A wind turbine blade pitch system according to claim 1, wherein the central annular region (80) comprises a first concentric groove (90) connecting the central annular region (80) and the inner annular flange region (78) and a second concentric groove (92) connecting the central annular region (80) and the outer annular flange region (76).

9. A wind turbine blade pitch system according to any preceding claim, wherein the thickness of the central annular region (80) is less than the thickness of the outer and inner annular flange regions (76, 78).

10. A wind turbine blade pitch system according to any preceding claim, wherein the connection plate (62) is secured to the traverse (42) using a plurality of bolts (66), wherein each bolt of the plurality of bolts (66) comprises a body diameter of 12mm and a body length of 80mm.

11. A wind turbine blade pitch system according to any preceding claim, wherein the connection plate (62) is secured to the traverse (42) using a plurality of bolts (66), wherein each bolt of the plurality of bolts (66) comprises a central section having a diameter less than the body diameter of the bolt.

12. A wind turbine blade pitch system according to any preceding claim, further comprising a flexible spacer provided between the connection plate (62) and the traverse (42).

13. A wind turbine blade pitch system according to any preceding claim, further comprising a flexible spacer provided between the connection plate (62) and the traverse holder (40).

14. A wind turbine comprising a wind turbine blade pitch system according to any preceding claim.

## Patentansprüche

1. Windkraftanlagen-Blattwinkelverstellsystem zum Drehen von Rotorblättern (18) einer Windkraftanlage (10) im Verhältnis zu einer Nabe (20), wobei die Windkraftanlagen-Blattwinkelverstellsystem Folgendes umfasst:
ein Stellstange (38), die in eine axiale Richtung bewegbar ist;
eine Querträgerhalterung (40);
einen Querträger (42), der drehbar an der Stellstange (38) montiert ist, wobei der Querträger (42) einen Querträgerarm (44) umfasst, der sich radial von der Querträgerhalterung (40) erstreckt;
eine Verbindungsplatte (62), die drehbar den Querträger (42) und die Querträgerhalterung (40) koppelt; und,
einen Kurbelarm (46), der an einem Ende mit dem Querträgerarm (44) und an einem anderen Ende mit einem drehbaren Blattwinkellager (48), das mit dem Rotorblatt (18) gekoppelt ist, verbunden ist, wobei der Kurbelarm (46) ausgelegt ist, um die axiale Bewegung der Stellstange (38) in eine Drehbewegung des Rotorblatts (18) umzusetzen,
**dadurch gekennzeichnet, dass**
die Verbindungsplatte (62) Folgendes umfasst:
einen inneren ringförmigen Flanschbereich (78), der an der Querträgerhalterung (40) gesichert ist;
einen äußeren ringförmigen Flanschbereich (76), der an dem Querträger (42) gesichert ist; und,
einen zentralen ringförmigen Bereich (80), der radial zwischen dem inneren und dem äußeren ringförmigen Flanschbereich (78, 76) positioniert ist und diese verbindet, wobei der zentrale ringförmige Bereich (80) ausgelegt ist, um sich im Verhältnis zu dem inneren und dem äußeren ringförmigen Flanschabschnitt (78, 76) durchzubiegen, um die Steifigkeit der Verbindungsplatte (62) zwischen dem inneren und dem äußeren ringförmigen Flanschabschnitt (78, 76) zu verringern.

2. Windkraftanlagen-Blattwinkelverstellsystem nach Anspruch 1, wobei der zentrale ringförmige Bereich (80) einen ersten Satz von radialen Armen (82) umfasst, der den zentralen ringförmigen Bereich (80) und den äußeren ringförmigen Flanschbereich (76) verbindet, und einen zweiten Satz von radialen Armen (86), der den zentralen ringförmigen Bereich (80) und den inneren ringförmigen Flanschbereich (78) verbindet.

3. Windkraftanlagen-Blattwinkelverstellsystem nach Anspruch 2, wobei der erste Satz von radialen Armen (82), diametral gegenüberliegend sind.

4. Windkraftanlagen-Blattwinkelverstellsystem nach Anspruch 2 oder 3, wobei der zweite Satz von radialen Armen (86) diametral gegenüberliegend sind.

5. Windkraftanlagen-Blattwinkelverstellsystem nach Anspruch 4, wenn von Anspruch 3 abhängig, wobei der erste Satz von radialen Armen (82) von dem zweiten Satz von radialen Armen (86) um 90 Grad versetzt ist.

6. Windkraftanlagen-Blattwinkelverstellsystem nach einem der vorstehenden Ansprüche, weiter umfassend einen ersten Satz von halbkreisförmigen Schlitzen (84), die radial zwischen dem zentralen ringförmigen Bereich (80) und dem äußeren ringförmigen Flanschbereich (76) gelegen sind, und einen zweiten Satz von halbkreisförmigen Schlitzen (88), die radial zwischen dem zentralen ringförmigen Bereich (80) und dem inneren ringförmigen Flanschbereich (78) gelegen sind.

7. Windkraftanlagen-Blattwinkelverstellsystem nach einem der Ansprüche 1 bis 5, weiter umfassend einen ersten Satz von halbkreisförmigen Rillen, die den zentralen ringförmigen Bereich (80) und den äußeren ringförmigen Flanschbereich (76) verbinden, und einen zweiten Satz von halbkreisförmigen Rillen, die den zentralen ringförmigen Bereich (80) und den inneren ringförmigen Flanschbereich (78) verbinden.

8. Windkraftanlagen-Blattwinkelverstellsystem nach Anspruch 1, wobei der zentrale ringförmige Bereich (80) eine erste konzentrische Rille (90) umfasst, die den zentralen ringförmigen Bereich (80) und den inneren ringförmigen Flanschbereich (78) verbindet, und eine zweite konzentrische Rille (92), die den zentralen ringförmigen Bereich (80) und den äußeren ringförmigen Flanschbereich (76) verbindet.

9. Windkraftanlagen-Blattwinkelverstellsystem nach einem der vorstehenden Ansprüche, wobei die Dicke des zentralen ringförmigen Bereichs (80) geringer ist als die Dicke des äußeren und des inneren ringförmigen Flanschbereichs (76, 78).

10. Windkraftanlagen-Blattwinkelverstellsystem nach einem der vorstehenden Ansprüche, wobei die Verbindungsplatte (62) unter Verwendung einer Vielzahl von Schrauben (66) an dem Querträger (42) gesichert ist, wobei jede Schraube der Vielzahl von Schrauben (66) einen Körperdurchmesser von 12 mm und eine Körperlänge von 80 mm umfasst.

11. Windkraftanlagen-Blattwinkelverstellsystem nach einem der vorstehenden Ansprüche, wobei die Verbindungsplatte (62) unter Verwendung einer Vielzahl von Schrauben (66) an dem Querträger (42) gesichert ist, wobei jede Schraube der Vielzahl von Schrauben (66) einen zentralen Bereich umfasst, der einen Durchmesser aufweist, der geringer ist als der Körperdurchmesser der Schraube.

12. Windkraftanlagen-Blattwinkelverstellsystem nach einem der vorstehenden Ansprüche, weiter umfassend einen flexiblen Abstandhalter, der zwischen der Verbindungsplatte (62) und dem Querträger (42) bereitgestellt ist.

13. Windkraftanlagen-Blattwinkelverstellsystem nach einem der vorstehenden Ansprüche, weiter umfassend einen flexiblen Abstandhalter, der zwischen der Verbindungsplatte (62) und der Querträgerhalterung (40) bereitgestellt ist.

14. Windkraftanlage, umfassend eine Windkraftanlagen-Blattwinkelverstellsystem nach einem der vorstehenden Ansprüche.

## Revendications

1. Système de calage des pales d'éolienne destiné à mettre en rotation des pales de rotor (18) d'une éolienne (10) par rapport à un moyeu (20), le système de calage d'éolienne comprenant :
une tige d'actionnement (38) mobile dans une direction axiale ;
un élément de retenue de traverse (40) ;
une traverse (42) montée rotative sur la tige d'actionnement (38), dans lequel la traverse (42) comprend un bras de traverse (44) s'étendant radialement depuis l'élément de retenue de traverse (40) ;
une plaque de raccordement (62) couplant en rotation la traverse (42) et l'élément de retenue de traverse (40) ; et,
une bielle (46) raccordée au niveau d'une extrémité au bras de traverse (44) et au niveau d'une autre extrémité à un palier de calage rotatif (48) couplé à la pale de rotor (18), la bielle (46) étant configurée pour convertir le mouvement axial de la tige d'actionnement (38) en un mouvement de rotation de la pale de rotor (18),
**caractérisé en ce que**
la plaque de raccordement (62) comprend :
une région de bride annulaire interne (78) fixée à l'élément de retenue de traverse (40) ;
une région de bride annulaire externe (76) fixée à la traverse (42) ; et,
une région annulaire centrale (80) positionnée radialement entre et raccordant les régions de brides annulaires interne et externe (78, 76), dans lequel la région annulaire centrale (80) est configurée pour fléchir par rapport aux parties de brides annulaires interne et externe (78, 76) pour réduire la rigidité de la plaque de raccordement (62) entre les parties de brides annulaires interne et externe (78, 76).

2. Système de calage des pales d'éolienne selon la revendication 1, dans lequel la région annulaire centrale (80) comprend un premier ensemble de bras radiaux (82) raccordant la région annulaire centrale (80) et la région de bride annulaire externe (76) et un second ensemble de bras radiaux (86) raccordant la région annulaire centrale (80) et la région de bride annulaire interne (78).

3. Système de calage des pales d'éolienne selon la revendication 2, dans lequel le premier ensemble de bras radiaux (82) sont diamétralement opposés.

4. Système de calage des pales d'éolienne selon la revendication 2 ou 3, dans lequel le second ensemble de bras radiaux (86) sont diamétralement opposés.

5. Système de calage des pales d'éolienne selon la revendication 4 lorsqu'elle dépend de la revendication 3, dans lequel le premier ensemble de bras radiaux (82) est décalé du second ensemble de bras radiaux (86) de 90 degrés.

6. Système de calage des pales d'éolienne selon une quelconque revendication précédente, comprenant en outre un premier ensemble de fentes semi-circulaires (84) situé radialement entre la région annulaire centrale (80) et la région de bride annulaire externe (76) et un second ensemble de fentes semi-circulaires (88) situé radialement entre la région annulaire centrale (80) et la région de bride annulaire interne (78).

7. Système de calage des pales d'éolienne selon l'une quelconque des revendications 1 à 5, comprenant en outre un premier ensemble de rainures semi-circulaires raccordant la région annulaire centrale (80) et la région de bride annulaire externe (76) et un second ensemble de rainures semi-circulaires raccordant la région annulaire centrale (80) et la région de bride annulaire interne (78).

8. Système de calage des pales d'éolienne selon la revendication 1, dans lequel la région annulaire centrale (80) comprend une première rainure concentrique (90) raccordant la région annulaire centrale (80) et la région de bride annulaire interne (78) et une seconde rainure concentrique (92) raccordant la région annulaire centrale (80) et la région de bride annulaire externe (76).

9. Système de calage des pales d'éolienne selon une quelconque revendication précédente, dans lequel l'épaisseur de la région annulaire centrale (80) est inférieure à l'épaisseur des régions de brides annulaires externe et interne (76, 78).

10. Système de calage des pales d'éolienne selon une quelconque revendication précédente, dans lequel la plaque de raccordement (62) est fixée à la traverse (42) en utilisant une pluralité de boulons (66), dans lequel chaque boulon de la pluralité de boulons (66) comprend un diamètre de corps de 12 mm et une longueur de corps de 80 mm.

11. Système de calage des pales d'éolienne selon une quelconque revendication précédente, dans lequel la plaque de raccordement (62) est fixée à la traverse (42) en utilisant une pluralité de boulons (66), dans lequel chaque boulon de la pluralité de boulons (66) comprend une section centrale présentant un diamètre inférieur au diamètre de corps du boulon.

12. Système de calage des pales d'éolienne selon une quelconque revendication précédente, comprenant en outre une entretoise flexible fournie entre la plaque de raccordement (62) et la traverse (42).

13. Système de calage des pales d'éolienne selon une quelconque revendication précédente, comprenant en outre une entretoise flexible fournie entre la plaque de raccordement (62) et l'élément de retenue de traverse (40).

14. Éolienne comprenant un système de calage des pales d'éolienne selon une quelconque revendication précédente.
